(19) Europäisches Patentamt

European Patent Office

Office européen des brevets

(11) **EP 0 947 755 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.$^7$: **F16K 47/02**, F16K 25/04, F17D 1/20

(21) Anmeldenummer: **99105982.5**

(22) Anmeldetag: **25.03.1999**

(54) **Anordnung zur Verhinderung eines Kavitationsschlages beim schnellen Absperren einer zum Transport von Flüssigkeiten genutzten Rohrleitung**

Arrangement for avoiding a cavitation peak during fast closing of a pipeline for transportation of a fluid

Dispositif pour éviter un pic de cavitation lors de la fermeture rapide d'un conduit servant a transporter un fluide

(84) Benannte Vertragsstaaten:
**AT BE CH DE DK FR GB IT LI LU NL**

(30) Priorität: **04.04.1998 DE 19815242**

(43) Veröffentlichungstag der Anmeldung:
**06.10.1999 Patentblatt 1999/40**

(73) Patentinhaber:
• **Forschungszentrum Rossendorf e.V.**
**01328 Dresden (DE)**
• **Fraunhofer-Gesellschaft zur Förderung der angewandten Forschung e.V.**
**80686 München (DE)**

(72) Erfinder:
• **Prasser, Horst-Michael, Dr.**
**01324 Dresden (DE)**
• **Schlüter, Stefan, Dr.**
**46117 Oberhausen (DE)**
• **Dudlik, Andreas**
**45319 Essen (DE)**

(56) Entgegenhaltungen:
EP-A- 0 194 474          WO-A-94/02775
GB-A- 1 444 005          JP-A- 58 040 629
US-A- 3 941 144          US-A- 5 391 209

• RASCHKE E., SEELINGER A., SPERBER A., STRASSBURGER A.: "simulation des instationären hydraulischen Verhaltens verfahrenstechniescher Anlagen mit langen Rohrleitungen" 1994 , CHEM.-ING.-TECH. XP002166355 66 * Seite 660, linke Spalte, Absatz 4 - rechte Spalte, Absatz 1 * * Abbildung 14 *

**Beschreibung**

Die Erfindung betrifft eine Anordnung zur sicheren und zuverlässigen Verhinderung des Kavitationsschlages, der beim schnellen Absperren von Rohrleitungen zur Förderung von Flüssigkeiten durch die Betätigung von schnellwirkenden Ventilen bzw. Klappen (Absperrarmatur) auftritt, wenn sich kurz nach dem Schließen der Absperrarmatur hinter dieser eine Kavitationsblase bildet.

Beim Schließen einer Absperrarmatur in einer Rohrleitung, in der eine Flüssigkeit mit einer bestimmten Geschwindigkeit strömt, kann es zu sogenannten Kavitationsschlägen kommen. In vielen technischen Anwendungen ist ein möglichst rasches Absperren von Rohrleitungen erforderlich. Ein Beispiel sind Leitungen zum Fördern von flüssigen Stoffen in chemischen Anlagen von einem Verfahrensschritt zum anderen. Schnellwirkende Absperrarmaturen werden auch vorgesehen, um im Fall eines Leitungsbruchs die Menge des aus dem Leck austretenden Mediums zu begrenzen und eine Ausweitung des Störfalls zu verhindern.

Druckschläge werden meist durch Verringerung der Schließgeschwindigkeit der Absperrarmatur vermindert. Erfahrungsgemäß kann hierdurch der Druckstoß auf der Zulaufseite leicht beherrscht werden, weil dieser unmittelbar durch die plötzliche Abbremsung der Flüssigkeitssäule ausgelöst wird. Eine Kavitationsblase hinter der Armatur kann jedoch auch bei größeren Schließzeiten entstehen, insbesondere wenn die Rohrleitung sehr lang ist (Thorley, A. R. D., "Fluid Transients in Pipeline Systems", D & L George LTD, 1991, Hadley Wood, Bamet, GB). Damit steht die Verringerung der Schließgeschwindigkeit in den meisten Fällen der Forderung entgegen, die Rohrleitung möglichst rasch abzusperren und kann deshalb nicht zur Verhinderung von Kondensationsschlägen angewandt werden.

Eine weitere bekannte Möglichkeit besteht in der Belüftung bzw. dem Einspeisen von anderen, nichtkondensierbaren Gasen in die Rohrleitung hinter der Absperrarmatur (Raschke, E., Salla, M., Hültenschmidt, W.: "Druckstoß gedämpft, Rohrleitung geschützt - Kondensastionsschläge in Rohrleitungen unter dem dämpfenden Einfluß von Gasen", Verfahrenstechnik 7-8/97, S. 45-49). Zu diesem Zweck wird eine Belüftungsarmatur dicht hinter der Absperrarmatur angebracht, die beim Auftreten eines Unterdrucks hinter der Absperrarmatur selbsttätig öffnet und eine bestimmte Menge Luft in die Transportleitung gelangen läßt. Dabei wird davon ausgegangen, daß der Unterdruck infolge Anwesenheit einer Kavitationsblase auftritt. Die Luft führt zum teilweisen Abbau des Unterdrucks in der Kavitationsblase. Außerdem wird durch die Anwesenheit der Luft die Kondensationsgeschwindigkeit des Dampfs während der Phase der Rückströmung der Flüssigkeit stark vermindert. Als drittes verbleibt nach vollständiger Kondensation des Dampfs eine Luftblase in der Leitung, die durch ihre gute Kompressibilität den Druckstoß dämpft. Alle drei genannten Effekte führen zu einer Verminderung der Druckspitzen beim Kavitationsschlag. In der Praxis kann Luft häufig nicht verwendet werden, weil sie mit der Flüssigkeit reagiert bzw. diese unzulässig verunreinigt. In diesen Fällen kommen andere, mit der Flüssigkeit nicht in Reaktion tretende Gase zum Einsatz. Nachteilig ist in jedem Fall, daß durch die Einspeisung die zu transportierenden Flüssigkeit verunreinigt wird.

Weiterhin besteht die Möglichkeit, durch den Einbau eines Windkessels die Entstehung von Dampfblasen in der Rohrleitung zu verhindern (Raschke, E., Seelinger, A., Sperber, A., Straßburger, A.: "Simulation des instationären hydraulischen Verhaltens verfahrenstechnischer Anlagen mit langen Rohrleitungen", CIT 66 (1994) 5, S. 652-660). Der Windkessel wird hierzu hinter der Absperrarmatur angeschlossen. Er ist bei Normalbetrieb teilweise mit der zu transportierenden Flüssigkeit gefüllt, über der sich ein Gaspolster befindet. Nachteilig ist, daß der Windkessel zusätzlichen Raum beansprucht und daß Löslichkeit des Gases in der Flüssigkeit im Windkessel zu einer Verunreinigung der zu transportierenden Flüssigkeit in der Rohrleitung führt. Weiterhin müssen die Gasverluste durch dessen Löslichkeit durch Nachspeisen ausgeglichen werden.

Aufgabe der Erfindung ist es, eine Anordnung vorzuschlagen, die nach erfolgtem Schließen der Absperrarmatur das Auftreten von Druckschlägen sicher verhindert, ohne dabei die Schließgeschwindigkeit der Absperrarmatur zu senken, ohne eine Einspeisung von Luft oder anderen Gasen in die Rohrleitung vorzunehmen und ohne einen Windkessel einzusetzen.

Erfindungsgemäß wird die Aufgabe durch die in Patentanspruch 1 aufgeführten Merkmale gelöst. Vorteilhafte Ausgestaltungen der erfindungsgemäßen Anordnung sind in den abhängigen Ansprüchen definiert. Die Hilfsarmatur wird automatisch geschlossen, wenn die von einem in der Rohrleitung angebrachten Strömungssensor ermittelte Geschwindigkeit einen Schwellwert unterschreitet. Das Geschwindigkeitssignal wird hierzu von einem Schwellwertschalter überwacht, der bei Unterschreitung des vorgegebenen Schwellwerts das Signal zum Schließen der Hilfsarmatur ausgibt. Die Strömungsumkehr ist gleichbedeutend mit der Unterschreitung des Grenzwertes Null für die Flüssigkeitsgeschwindigkeit. Der Abstand zwischen Absperr- und Hilfsarmatur soll vorzugsweise so gewählt werden, daß die Kavitationsblase die Hilfsarmatur in keinem Fall erreichen kann. Die Position kann durch eine Auslegungsrechnung ermittelt werden:

Wenn die Flüssigkeit der Dichte $\rho$ mit einer Anfangsgeschwindigkeit $v_0$ strömt, der Sättigungsdruck bei der vorliegenden Temperatur den Wert $p_s$ besitzt, am Ende der Transportleitung ein Gegendruck $p_G$ vorliegt und die Rohrleitung eine Länge L hat und horizontal verlegt ist, so tritt bei schnellem Schließen der Absperrarmatur eine Kavitationsblase auf, die die folgende maximale Länge $L_{max}$ nicht überschreiten kann:

$$L_{max} = \frac{1}{2} \cdot v_0^2 \cdot \frac{\rho \cdot L}{p_G - p_S}$$

Der Abstand zwischen der Absperr- und der Hilfsarmatur ∆L sollte mindestens L_max betragen. Bei Flüssigkeiten höherer Zähigkeit sollte die Reibung bei der Berechnung der maximalen Ausdehnung der Kavitationsblase berücksichtigt werden. Der Reibungsdruckverlust führt zu einer Verringerung der maximalen Länge gegenüber dem nach der Formel berechneten Wert. Als Anfangsgeschwindigkeit $v_0$ wird die Geschwindigkeit verstanden, bei der der Prozeß des Schließens der Absperrarmatur beginnt. Dabei muß zweckmäßigerweise die größte zu erwartende Strömungsgeschwindigkeit angenommen werden.
Nach dem Ansprechen der Hilfsarmatur bleibt die Kavitationsblase und damit der Unterdruck im Raum zwischen beiden Armaturen bestehen. Ein Öffnen der Absperrarmatur würde in dieser Situation zu einem Kavitationsschlag führen. Eine Möglichkeit, diesen Druckstoß zu verhindern, besteht erfindungsgemäß in einem entsprechend langsamen Abbau der Kavitationsblase über eine Auffüllarmatur, über die Flüssigkeit aus einem Reservoir in die Transportleitung eingespeist wird, welches die Kavitationsblase auffüllt. Die Auffüllarmatur wird geöffnet, wenn das Signal von einem Drucksensor einen vorgegebenen Schwellwert unterschreitet.

Das Auffüllen geschieht vorzugsweise durch Zuspeisen von Flüssigkeit, die der Transportleitung selbst entnommen wird. Hierfür wird die Auffüllarmatur mit dem Abschnitt der Transportleitung vor der Absperrarmatur verbunden. Eine zweite Möglichkeit besteht in einer Entnahme der Füllflüssigkeit aus dem Abschnitt der Transportleitung hinter der Hilfsarmatur.

Solange noch eine Kavitationsblase im Raum zwischen Absperrarmatur und Hilftarmatur vorhanden ist, muß dafür gesorgt werden, daß die Absperrarmatur nicht geöffnet werden kann, weil es dabei zu einem Kondensationsschlag kommen kann. Erfindungsgemäß wird dies durch eine Verriegelungsschaltung erreicht, die die Verbindung zwischen der Betätigungsvorrichtung für das Öffnen der Absperrarmatur und dem Antrieb der Absperrarmatur unterbricht, solange der Druck im Rohrleitungsabschnitt zwischen der Absperr- und der Hilfsarmatur einen vorgegebenen Schwellwert unterschreitet.

Nachfolgend wird die Erfindung an einem Ausführungsbeispiel näher erläutert.

Die zugehörige Zeichnung zeigt die erfindungsgemäße Anordnung in ihrer Ausführung mit Hilfsarmatur, Strömungssensor und Schwellwertschalter zur automatischen Betätigung der Hilfsarmatur, mit Auffüllarmatur sowie mit Drucksensor und Schwellwertschalter zur Steuerung der Auffüllarmatur und mit Verriegelung zur Verhinderung des Öffnens der Absperrarmatur beim Vorhandensein einer Kavitationsblase.

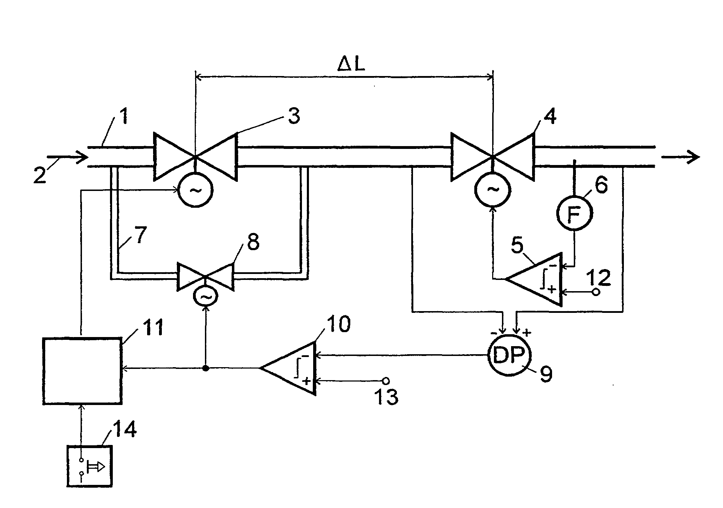

In der Zeichnung ist die Rohrleitung 1 dargestellt, in der im Normalbetrieb eine Flüssigkeit in der mit 2 bezeichneten Richtung strömt. In der Rohrleitung befindet sich eine Absperrarmatur 3, die zum schnellen Unterbrechen des Flüssigkeitsstroms dient.

In einem Abstand in Strömungsrichtung hinter der Absperrarmatur 3, der größer sein muß, als die maximale Ausdehnung der Kavitationblase nach Formel 1, befindet sich die Hilfsarmatur 4. Die Hilfsarmatur 4 wird erfindungsgemäß durch das Signal vom Schwellwertschalter 5 derart angesteuert, daß sie geschlossen wird, wenn der Strömungssensor 6 einen Abfall der Strömungsgeschwindigkeit unter den vorgegebenen Geschwindigkeitsschwellwert 12, der möglichst nahe 0 liegen soll, detektiert.
Die Verhinderung des Kavitationsschlages erklärt sich wie folgt: Nach dem Schließen der Absperrarmatur führt die Trägheit der in Bewegung befindlichen Flüssigkeitssäule dazu, daß hinter der bereits geschlossenen Absperrarmatur der Druck zeitweilig stark abnimmt. Wenn dabei der Sättigungsdruck der Flüssigkeit unterschritten wird, kommt es zur Verdampfung und zur Herausbildung einer Kavitationsblase. Da am Rohrleitungsende in der Regel ein höherer Druck als in der Kavitationsblase herrscht, wird die Flüssigkeitssäule kontinuierlich abgebremst. Nach einiger Zeit kommt es zur Umkehr der Bewegungsrichtung. Die Kavitationsblase erreicht zu diesem Zeitpunkt ihre maximale Ausdehnung, die in erster Linie von der Fließgeschwindigkeit vor Schließen der Absperrarmatur, von der Rohrleitungslänge, von der Rohrreibung und vom Gegendruck am Rohrleitungsende abhängt. Ohne die erfindungsgemäße Anordnung führt danach die weiterhin bestehende Druckdifferenz zur Beschleunigung der Flüssigkeitssäule in Richtung auf die geschlossene Absperrarmatur. Die Flüssigkeit prallt schließlich mit einer erheblichen Endgeschwindigkeit auf die geschlossene Armatur, wobei kurzzeitige Druck- und Kraftspitzen auftreten, die zu einer Zerstörung der Armatur, der Rohrleitung oder der Aufhängung bzw. Lagerung der Rohrleitung führen können. Dieser Effekt wird als Kavitationsschlag bezeichnet.

Die erfindungsgemäß hinter der Absperrarmatur 3 angeordnete Hilfsarmatur 4 wird geschlossen, wenn das Ausgangssignal des Strömungssensor 6 den Geschwindigkeitsschwellwert 12 unterschreitet. Dadurch wird die Flüssigkeit durch die Hilfsarmatur 4 plötzlich abgebremst. Der dabei auftretende Druckstoß ergibt sich aus der Momentangeschwindigkeit zum Zeitpunkt des Schließens der Hilfsarmatur 4. Der Geschwindigkeitsschwellwert 12 ist deshalb vorzugsweise auf einen Wert einzustellen, dessen Betrag so klein wie möglich ist. Das Absperren der Hilfsarmatur 4 erfolgt damit etwa zum Zeitpunkt der Strömungsumkehr und der größten Ausdehnung der Kavitationsblase. Letztere wird zwischen der Absperrarmatur 3 und der Hilfsarmatur 4 eingeschlossen und am Kondensieren gehindert. Der Kavitationsschlag wird unterbunden.

Wenn die Hilfsarmatur 4 in einem Abstand hinter der Absperrarmatur 3 angeordnet ist, bei dem die Kavitationsblase sich bis in die Rohrleitung hinter der Hilfsarmatur ausdehnen kann, ist die Verhinderung des Kavitationsschlages nicht voll wirksam. Der Teil der Kavitationsblase, der sich nach Schließen der Hilfsarmatur 4 in der Rohrleitung 1 hinter der Hilfsarmatur 4 befindet, wird anschließend kondensieren, wodurch ein Kavitationsschlag auftritt. Die Höhe dieses Druckstoßes wird jedoch kleiner sein, als die Höhe des Druckstoßes, der ohne die Verwendung der Hilfsarmatur auftreten würde.

Nach dem Ansprechen der Hilfsarmatur 4 bleibt die Kavitationsblase und damit der Unterdruck im Raum zwischen beiden Armaturen 3,4 bestehen. Um ein emeutes Öffnen der Absperrarmatur 3 ohne das Auftreten eines Druckstoßes zu ermöglichen, wird erfindungsgemäß ein entsprechend langsamer Abbau der Kavitationsblase über die Auffüllarmatur 8 erreicht. Dazu ist die Auffüllarmatur 8 in einer Auffülleitung 7 angeordnet, die den Abschnitt der Rohrleitung 1 vor der Absperrarmatur 3 mit dem Abschnitt zwischen Absperrarmatur 3 und Hilfsarmatur 4 verbindet. Zum Abbau der Kavitationsblase wird die Auffüllarmatur 8 geöffnet. Die Auffüllarmatur 8 wird so ausgelegt, daß ihr Strömungsquerschnitt wesentlich kleiner ist, als der Querschnitt der Rohrleitung 1, so daß das Auffüllen so langsam geschieht, daß durch das Auffüllen kein Druckstoß auftritt.

Eine automatische Steuerung der Auffüllarmatur 8 wird erfindungsgemäß durch den Drucksensor 9 sowie den Schwellwertbaustein 10 realisiert. Die Auffüllarmatur 8 wird geöffnet, wenn der Druckschwellwert 13 im Abschnitt der Rohrleitung 1 zwischen der Absperrarmatur 3 und der Hilfsarmatur 4 unterschritten wird.

Eine weitere wichtige Funktion der Erfindung besteht darin, zu verhindern, daß die Absperrarmatur 3 geöffnet werden kann, wenn sich eine Kavitationsblase zwischen den beiden Armaturen 3 und 4 befindet. Das wird erfindungsgemäß dadurch erreicht, daß eine Verriegelungsschaltung 11 das Öffnen der Absperrarmatur 3 blockiert, wenn der Schwellwertbaustein 10 in der weiter oben bereits dargelegten Weise das Unterschreiten des Druckschwellwertes 13 und damit das Vorhandensein einer Kavitationsblase anzeigt. Die Verriegelungsschaltung 11 ist zwischen der Betätigungseinrichtung 14 für das Öffnen der Absperrarmatur 3 und den Antrieb der Absperrarmatur 3 angeordnet.

## Patentansprüche

1. Anordnung zur Verhinderung eines Kavitationsschlages beim schnellen Absperren einer zum Transport von Flüssigkeiten genutzten Rohrleitung (1) durch Schließen einer Absperrarmatur (3), **dadurch gekennzeichnet,**
daß die Rohrleitung (1) in Fließrichtung hinter der Absperrarmatur (3) mit einer Hilfsarmatur (4) versehen ist und
daß sich in der Rohrleitung (1) ein Strömungssensor (6) befindet, dessen Ausgang über einen Schwellwertschalter (5) mit dem Antrieb der Hilfsarmatur (4) verbunden ist.

2. Anordnung nach Anspruch 1 , **dadurch gekennzeichnet,**
daß die Rohrleitung zwischen der Absperr- und der Hilfsarmatur über eine Auffülleitung (7) und eine Auffüllarmatur (8) mit einem Flüssigkeitsreservoir verbunden ist und
daß in der Rohrleitung zwischen Absperr- und Hilfsarmatur ein Drucksensor (9) angeordnet ist, dessen Ausgang über einen Schwellwertschalter (10) mit dem Antrieb der Auffüllarmatur (8) verbunden ist.

3. Anordnung nach Anspruch 2, **dadurch gekennzeichnet, daß** als Flüssigkeitsreservoir die Rohrleitung vor der Absperr- oder hinter der Hilfsarmatur eingesetzt ist.

4. Anordnung nach Anspruch 1, **dadurch gekennzeichnet, daß** eine Verriegelungsschaltung (11) vorgesehen ist, deren Ausgang auf den Antrieb der Absperrarmatur (3) geschaltet ist, deren einer Eingang mit dem Ausgang des Schwellwertschalters und deren anderer Eingang mit der Betätigungseinrichtung (14) für die Absperrarmatur verbunden ist.

## Claims

1. Arrangement for avoiding a cavitation peak during fast closing of a pipeline (1) for transportation of a fluid by the closure of a shut-off valve (3) **characterised by** the pipeline (1) being fitted with an auxiliary shut-off valve (4) behind the shut-off valve (3) and
there being a flow rate sensor (6) in the pipeline (1), the output of which is connected to the auxiliary shut-off valve (4) via a threshold switch (5).

2. Arrangement according to claim 1, **characterised by**
the pipeline between the shut-off valve and the auxiliary shut-off valve being connected to a fluid reservoir via a filling line (7) and filling line valve (8) and there being a pressure sensor (9) in the pipeline between the shut-off valve and the auxiliary shut-off valve, the output of which is connected to the drive mechanism of the filling line valve (8) via a threshold switch (10).

3. Arrangement according to claim 2, **characterised by**
the pipeline in front of the shut-off valve or behind the auxiliary shut-off valve being used as a fluid reservoir.

4. Arrangement according to claim 1, **characterised**

**by**

there being a locking switch (11), the output of which is connected to the drive mechanism of the shut-off valve (3), one input of which is connected to the output of the threshold switch and the other input of which is connected to the operating mechanism (14) for the shut-off valve.

## Revendications

1. Dispositif pour éviter un pic de cavitation lors de la fermeture rapide d'un conduit (1) servant à transporter un fluide par la fermeture d'une robinetterie de sectionnement (3), **caractérisé en ce que** le conduit (1) est équipé en aval de la robinetterie de sectionnement (3) dans le sens de l'écoulement d'une robinetterie auxiliaire (4) et **en ce qu'**il se trouve dans le conduit (1) un capteur d'écoulement (6) dont la sortie est reliée à l'entraînement de la robinetterie auxiliaire (4) par l'intermédiaire d'un commutateur à valeur de seuil (5).

2. Dispositif selon la revendication 1, **caractérisé en ce que** le conduit est raccordé entre la robinetterie de sectionnement et la robinetterie auxiliaire par une conduite d'approvisionnement (7) et une robinetterie d'approvisionnement (8) à un réservoir de fluide et **en ce que** dans le conduit entre la robinetterie de sectionnement et la robinetterie auxiliaire est placé un capteur de pression (9) dont la sortie est raccordée à l'entraînement de la robinetterie d'approvisionnement (8) par l'intermédiaire d'un commutateur à valeur de seuil (10).

3. Dispositif selon la revendication 2, **caractérisé en ce que** le réservoir de fluide est constitué par le conduit en amont de la robinetterie de sectionnement et en aval de la robinetterie auxiliaire.

4. Dispositif selon la revendication 1, **caractérisé en ce qu'**un circuit de verrouillage (11) est prévu dont la sortie est connectée à l'entraînement de la robinetterie de sectionnement (3), et dont une des entrées est connectée à la sortie du commutateur à valeur de seuil et dont l'autre entrée est connectée au dispositif d'actionnement (14) de la robinetterie de sectionnement.